# FASCICULE DE BREVET EUROPEEN

(11) **EP 0 804 083 B1**
(45) Date de publication et mention de la délivrance du brevet: **18.09.2002**
(21) Numéro de dépôt: 95944868.9
(22) Date de dépôt: 27.10.1995
(51) Int. Cl.: A21C 11/20, A21C 3/04, A23P 1/12

(54) **FABRICATION DE NOUILLES**
HERSTELLUNG VON NUDELN
MAKING NOODLES

(43) Date de publication de la demande: 05.11.1997
(73) Titulaire: SOCIETE DES PRODUITS NESTLE S.A., 1800 Vevey (CH)
(72) Inventeur: LECHTHALER, Jürg, CH-8304 Wallisellen (CH); RUSCONI, Luca, CH-8400 Winterthur (CH); TEH, Shiok Guat, Nestlé R & D Center (Pte) Ltd., Singapore 2261 (SG); MEYER, Philipp, Paul, CH-8121 Benglen (CH); MOHAMAD YUSOFF, Othman, CH-1814 La Tour-de-Peilz (CH)
(74) Mandataire: Wavre, Claude-Alain
(86) Numéro de dépôt international: CH9500251
(87) Numéro de publication internationale: WO97016070

(56) Documents cités:
- EP-A- 0 086 246
- EP-A- 0 203 321
- EP-A- 0 398 315
- EP-A- 0 471 103
- EP-A- 0 682 875
- GB-A- 2 043 424
- US-A- 4 121 301

## Description

La présente invention a pour objet un procédé de fabrication de nouilles dans lequel on prépare un mélange de farine ou céréale et d'eau présentant une teneur en eau de 25-40%, on convertit le mélange en une bande de pâte, on lamine la bande et on la découpe en nouilles.

EP0203321 (SOCIETE DES PRODUITS NESTLE S.A.) décrit un procédé de fabrication de pâtes alimantaires, dans lequel un mélange de farine et 15-35% d'eau sont mélangés pour faire une pâte, la pâte est extrudée sous relativement haute pression au travers d'une filière comprenant plusieurs orifices de sortie en forme de fentes superposées, et les feuilles de pâte extrudée superposées ainsi obtenues sont comprimées en une seule feuille dans un dispositif de laminage.

EP0471103 (SOCIETE DES PRODUITS NESTLE S.A.) décrit un procédé de fabrication de pâtes alimentaires à l'aide d'un seul extrudeur bivis dans lequel on réalise successivement les opérations de mélange de farine et eau, pétrissage du mélange pour former une pâte et extrusion de la pâte sous relativement haute pression au travers d'une filière.

US 5211965 (KK TAKASHIN), décrit un appareil pour la fabrication d'une base pour nouilles comprenant un dispositif cylindrique à vis de transport présentant à une extrémité une entrée pour l'alimentation en matières premières de la base pour nouille et à une autre extrémité une filière d'extrusion présentant un orifice de sortie rectangulaire dont la largeur est ajustable, de manière à pouvoir ajuster la pression à laquelle est soumis le mélange de matières premières poussé au travers de l'orifice par la vis de transport, et de pouvoir ajuster ainsi le débit et/ou la fermeté de la base pour nouilles ainsi extrudée sous forme de bande épaisse.

Par ailleurs, des lignes traditionnelles commercialisées par des firmes telles que Ohtake, Fuji ou Tokyo Menki pour la fabrication industrielle de nouilles orientales peuvent comprendre des dispositifs successifs de mélange des composants, conversion du mélange en une bande de pâte, laminage de la bande, découpage, traitement à la vapeur, mise en forme de pelote, séchage, refroidissement et conditionnement, le dispositif de mélange comprenant lui-même généralement deux mélangeurs à palettes horizontaux ou verticaux montés en parallèle, les composants étant mélangés par charges alternativement dans l'un ou dans l'autre mélangeur.

La présente invention a pour but de proposer un procédé de fabrication de nouilles qui soit simples et ne soumette ledit mélange de farine ou semoule de céréale et d'eau qu'à un faible cisaillement.

A cet effet, le procédé de fabrication de nouilles selon la présente invention, dans lequel on prépare un mélange de farine ou semoule de céréale et d'eau présentant une teneur en eau de 25-40%, on convertit le mélange en une bande de pâte en le pressant ensuite au travers d'une filière à orifice de sortie oblong, on lamine la bande et on la découpe en nouilles, se distingue par le fait que l'on prépare le mélange dans un malaxeur bivis sous une pression relative de 0-1000 kPa et on le convertit en une bande de pâte en le pressant au travers de la filière sous l'effet de la pression exercée par le malaxeur bivis, ou à l'aide d'une pompe à engrenage branchée entre le malaxeur et la filière.

Un appareil pour la mise en oeuvre du procédé selon la présente invention peut comprendre un malaxeur bivis, une filière à orifice de sortie oblong, un dispositif de laminage et un dispositif de découpage.

On a constaté avec surprise qu'il est en effet possible de fabriquer ainsi des nouilles présentant des qualités organoleptiques à tout le moins comparables à celles de nouilles, notamment de nouilles orientales, fabriquées par un procédé traditionnel, bien que le procédé soit comparativement plus simple.

Dans le présent exposé, le terme "nouilles" utilisé tel quel désigne au sens général toutes les pâtes ou nouilles à base de farine ou semoule de céréales présentant la forme d'une bande relativement mince de section généralement rectangulaire ou incurvée en forme de demi-tube.

L'expression "nouilles occidentales" désigne les pâtes alimentaires qui présentent une telle forme, qui sont préparées généralement à base de semoule de blé dur et d'eau, et dont on peut attendre qu'elles présentent une texture croquante sous la dent, en d'autres termes une texture "al dente", après cuisson dans l'eau salée durant un temps adéquat.

L'expression "nouilles orientales" désigne les pâtes qui présentent une telle forme, qui sont préparées généralement à base de farine de blé tendre et de kansui, et dont on peut attendre qu'elles présentent une texture élastique sous la dent après une relativement brève cuisson dans une quantité adéquate d'eau avec laquelle elles sont destinées à être consommées.

Le terme "kansui" désigne une solution aqueuse alcaline, à savoir de l'eau dans laquelle est dissoute une composition de sels comprenant notamment du NaCl, de la carboxyméthylcellulose (CMC), du K2CO3, du Na2CO3 et/ou du Na polyphosphate, par exemple. Ces sels sont destinés à exercer un effet stabilisateur de la texture élastique des nouilles orientales lors de leur consommation traditionnelle avec leur eau de cuisson.

Pour mettre en oeuvre le présent procédé, on utilise de préférence une farine ou semoule de blé, additionnée ou non d'ingrédients tels que du jaune d'oeuf ou des épices, par exemple. On peut en particulier utiliser une semoule de blé dur présentant une granulométrie de 250-350 um pour fabriquer des nouilles occidentales, ou une farine de blé tendre présentant une granulométrie de 50-150 um pour préparer des nouilles orientales, par exemple.

On peut éventuellement prévoir une étape de prémélange et préhydratation, notamment dans un mélangeur à ailettes rapide qui délivre un prémélange sous forme de grumeaux de semoule ou farine humidifiée, une telle étape permettant d'économiser notablement l'espace libre utile dans le malaxeur, par exemple.

On mélange donc la semoule ou farine avec une quantité d'eau telle que le mélange obtenu présente une teneur en eau de 25-40%, de préférence 30-35% en poids.

Pour fabriquer des nouilles occidentales, on peut mélanger de la semoule de blé dur avec de l'eau.

Pour fabriquer des nouilles orientales, on peut mélanger de la farine de blé tendre avec du kansui.

Le kansui peut comprendre 2-10% de NaCl, 0-1% de CMC, 0,1-1% de K2CO3 et/ou de Na2CO3 et 0-1% de Na polyphosphate. On peut également lui ajouter un colorant tel que le beta-carotène, par exemple.

On prépare donc le mélange dans un malaxeur bivis sous une pression relativement basse de 0-1000 kP. En fait, cette pression relative peut même être maintenue dans le bas de ce domaine et ne pas dépasser 100 kPa, par exemple.

Le dessin général ou l'arrangement et/ou l'agencement des divers éléments qui composent les deux vis du malaxeur, notamment des bilobes de mélange et/ou malaxage, peuvent en effet d'une part être prévus en sorte que les contraintes de pression et de cisaillement exercées sur le mélange soient minimisées et d'autre part être adaptés aux matières premières et au produit désiré.

Le temps de séjour du mélange dans le malaxeur peut être de 20-60 s, les deux vis pouvant tourner à une vitesse comprise entre 40 et 120 révolutions par min (rpm), par exemple.

On peut prévoir de dégazer le mélange avant qu'il ne sorte du malaxeur. On peut en particulier le dégazer par aspiration par un vide inférieur à une pression absolue de 50 kPa, de préférence inférieur ou égal à une pression absolue de 20 kPa. Un tel dégazage est particulièrement indiqué dans le cas d'une fabrication de nouilles occidentales déshydratées parcequ'il permet d'éviter un problème de craquèlement et l'apparition de taches blanches en surface des nouilles, par exemple.

Dans une forme préférée de réalisation du présent procédé, on presse le mélange au travers de la filière sous l'effet de la pression exercée par le malaxeur bivis.

Dans une forme de réalisation particulière du présent procédé, on prévoit de presser le mélange au travers de la filière à l'aide d'une pompe à engrenage branchée entre le malaxeur et la filière.

On a en effet constaté également avec surprise que, malgré le fait que le mélange passe ainsi au travers d'une pompe à engrenage et qu'il y soit soumis brièvement à des contraintes sévères dont on pourrait craindre qu'elles ne l'endommagent, cette forme de réalisation particulière du présent procédé permet également de fabriquer des nouilles présentant des qualités organoleptiques comparables à celles de nouilles fabriquées par un procédé traditionnel.

En effet, entre les dents d'une pompe à engrenage comprenant deux roues ou rouleaux dentés qui s'engrènent l'un dans l'autre, le mélange peut subir une compression de plusieurs MPa, par exemple. Si le mélange ne s'en trouve pas endommagé, cela peut être dû au fait qu'il ne subit cette compression que durant un temps très bref de l'ordre d'une fraction de seconde sans subir aucun cisaillement, par exemple.

Dans cette forme de réalisation particulière du présent procédé, la pression relative exercée par la pompe sur le mélange peut être comprise entre plus de 1000 kP et 12000 kP, de préférence entre 5000 kP et 12000 kP, par exemple.

On convertit donc le mélange en une bande de pâte en le pressant au travers d'une filière à orifice de sortie oblong. Cet orifice de sortie est de préférence rectangulaire et il peut être prévu dans un plan vertical ou horizontal, le grand côté du rectangle étant respectivement horizontal ou transversal, par exemple.

Dans la forme de réalisation préférée du procédé où l'on presse le mélange au travers de la filière sous l'effet de la pression exercée par le malaxeur bivis, les dimensions de l'orifice de sortie de la filière peuvent être prévues en sorte que la pression relative dans le malaxeur puisse être maintenue à la valeur relativement basse désirée. On peut prévoir ainsi une largeur de l'orifice de sortie, en particulier une longueur du petit côté du rectangle comprise entre 8 mm et 20 mm, et une longueur de l'orifice de sortie, en particulier une longueur du grang côté du rectangle comprise entre 50 mm et 200 mm, par exemple.

Dans la forme de réalisation particulière du présent procédé où l'on presse le mélange au travers de la filière à l'aide d'une pompe à engrenage branchée entre le malaxeur et la filière, on peut prévoir une largeur de l'orifice de sortie, en particulier une longueur du petit côté du rectangle comprise entre 1,5 mm et 10 mm, et une longueur de l'orifice de sortie, en particulier une longueur du grang côté du rectangle comprise entre 50 mm et 200 mm, par exemple.

On peut laminer la bande sortant de la filière en la faisant passer à travers une paire ou une succession de paires de rouleaux, notamment une succession de deux à cinq paires de rouleaux dont l'écartement va décroissant, à partir d'un premier écartement de 2-20 mm pour finir avec un dernier écartement de 0,6-1,5 mm, par exemple.

Une fois la bande laminée, on peut la découper dans le sens de la longueur, en lanières de 1-10 mm pour des nouilles occidentales ou de 1-3 mm de largeur pour des nouilles orientales, par exemple.

Au cas où l'on fabrique des nouilles occidentales, ces lanières ou nouilles de 1-10 mm de largeur peuvent être découpées transversalement à la longueur voulue. Elles peuvent alors être conditionnées telles quelles comme des pâtes alimentaires fraîches ou après avoir été déshydratées dans un séchoir à air chaud et à humidité contrôlée traditionnel, par exemple.

Au cas où l'on fabrique des nouilles orientales, ces lanières ou nouilles de 1-3 mm de largeur peuvent être traitées à la vapeur, mises en forme de pelote et déshydratées, notamment à l'air chaud ou par passage à la grande friture, par exemple.

Pour réaliser ce traitement à la vapeur et cette mise en forme de pelote, on peut notamment transformer chaque lanière ou nouille en un flot continu de boucles transversales en la faisant buter contre un frein adéquat. On peut passer ces flots à la vapeur à pression atmosphérique à 95-100°C durant 1-3 min et les découper transversalement en tronçons de longueur égale au double de leur largeur. On peut alors plier en deux les tronçons de manière à obtenir une pelote de nouilles carrée.

On peut sécher ces pelottes de nouilles orientales à l'air chaud à 65-95°C durant 30-60 min, ou en les passant à la grande friture à 120-160°C durant 30 s à 2 min, par exemple.

Dans ce dernier cas, on peut disposer chaque pelote dans une barquette de forme carrée que l'on plonge dans un bain d'huile chauffée à la température désirée, cette huile étant de préférence une huile résistante à la chaleur, notamment une huile de palme ou d'arachide, par exemple.

On peut ensuite refroidir les pelotes à l'air froid, notamment à l'aide d'un courant ou souffle d'air froid suffisamment fort pour détacher et entraîner sous forme de gouttelettes une partie au moins de l'huile restée en surface des nouilles frites.

On peut également faire précéder le passage à la grande friture d'une brève immersion des pelotes dans l'eau froide, notamment durant 1-5 s, afin d'éviter des problèmes éventuels de collage des nouilles.

Un appareil pour la mise en oeuvre du procédé selon la présente invention peut comprendre donc un malaxeur bivis, une filière à orifice de sortie oblong, un dispositif de laminage et un dispositif de découpage.

Le malaxeur bivis peut comprendre deux vis tournant dans le même sens et s'engrenant l'une dans l'autre, par exemple.

Les deux vis peuvent présenter en alternance et/ou en succession des zones de mélange, malaxage et/ou retenue, par exemple. Ces zones peuvent être formées de manière adéquate en jouant sur la longueur et le sens du pas de vis, voire sur la forme des vis dans ces zones.

Les deux vis peuvent comprendre en particulier deux arbres parallèles tournant dans le même sens sur lesquels sont enfilés et fixés les uns contre les autres des bilobes présentant chacun la forme d'une tranche de vis dont l'épaisseur peut être inférieure, égale ou supérieure au pas de vis. La longueur et le sens du pas de vis associé à un bilobe, de même que les positions angulaires respectives de deux bilobes successifs peuvent être choisis en fonction du type de travail ou d'opération que l'on désire réaliser dans la zone considérée.

Pour former une zone de mélange, on peut utiliser des bilobes à pas positif. Pour former une zone de malaxage, on peut utiliser des bilobes sans pas. Pour former une zone mixte de mélange et malaxage, on peut utiliser des bilobes successifs à pas positifs angulairement décalés. Enfin, pour former une zone de retenue, on peut utiliser des bilobes à pas négatif, par exemple.

La forme des bilobes d'un malaxeur bivis vue dans le sens de l'axe des vis peut se distinguer de la forme correspondante des bilobes d'une extrudeuse bivis, à titre de comparaison, par une largeur inférieure qui d'une part laisse plus d'espace libre à disposition de la matière à traiter et qui d'autre part laisse un angle d'attaque plus ouvert entre un sommet du bilobe et la paroi intérieure du manteau contre laquelle il tourne. Cet espace libre plus grand et cet angle d'attaque plus ouvert ont en particulier pour conséquence de minimiser le cisaillement exercé sur la matière traitée.

A cette largeur inférieure des bilobes peut également être associé un diamètre plus faible des axes ainsi qu'un rapport longueur/diamètre des vis plus faible, notamment un rapport compris entre 7 et 10 pour un malaxeur bivis comparé à un rapport compris entre 20 et 30 pour une extrudeuse bivis, par exemple.

Les deux vis peuvent être renfermées dans un fourreau à double paroi, notamment un fourreau à double paroi subdivisée en compartiments dans lesquels on peut faire circuler un fluide de refroidissement ou de réchauffement. Ce fourreau peut présenter à une extrémité amont une ou des entrées pour l'alimentation des vis en composants à mélanger et à une extrémité aval une éventuelle prise d'aspiration par le vide et une sortie pour le mélange.

La sortie du malaxeur peut déboucher directement sur la filière.

La filière présente donc un orifice de sortie oblong, de préférence rectangulaire, qui peut être prévu dans un plan vertical ou horizontal, le grand côté du rectangle étant respectivement horizontal ou transversal, par exemple.

Dans une forme de réalisation particulière de l'appareil, une pompe à engrenage peut être prévue entre la sortie du malaxeur et la filière.

La pompe à engrenage peut comprendre deux roues dentées, ou rouleaux dentés qui s'engrènent l'un dans l'autre. Les deux rouleaux peuvent tourner dans un logement sur des axes situés dans un plan perpendiculaire à la direction d'un courant du mélange à convertir en bande en provenance du malaxeur. Ils peuvent tourner chacun en sens inverse, les dents s'écartant en amont et se refermant en aval. Le bord extérieur des dents peut glisser contre une paroi intérieure correspondante du logement, définissant ainsi des espaces intersticiels destinés au transport du mélange à convertir en bande en aval.

La forme des dents peut être spécialement conçue pour éviter au maximum tout frottement entre les dents qui s'engrènent et tout cisaillement sur le mélange transporté.

La filière et l'éventuelle pompe à engrenage peuvent être enfermées dans un manteau à double paroi subdivisé en compartiments dans lesquels on peut faire circuler un fluide de refroidissement ou de réchauffement.

Le dispositif de laminage peut comprendre une paire ou une succession de paires de rouleaux, notamment une succession de deux à cinq paires de rouleaux dont l'écartement va décroissant. Une première paire de rouleaux peut présenter un écartement relativement grand, correspondant à la largeur de l'orifice de sortie de la filière, afin de pouvoir bien prendre le contrôle du mouvement d'avance de la bande, par exemple. Une dernière paire de rouleaux peut présenter un écartement correspondant à l'épaisseur finale désirée des nouilles, par exemple.

Le dispositif de découpage peut comprendre des moyens de découpage longitudinal, notamment des disques rotatifs prévus après la dernière paire de rouleaux, et des moyens de découpage transversal, notamment des lames, par exemple.

S'il est destiné à la fabrication de nouilles orientales, l'appareil peut comprendre un dispositif de freinage prévu après les moyens de découpage longitudinal et comportant notamment une butée contre laquelle les lanières ou nouilles individuelles sont forcées à former des boucles ou ondulations transversales qui forment un flot continu en se serrant l'une derrière l'autre.

Un dispositif de traitement à la vapeur de ces flots de boucles peut être prévu après le dispositif de freinage et avant les moyens de découpage transversal.

Après les moyens de découpage transversal, on peut prévoir un dispositif de pliage suivi d'un dispositif de séchage.

Ce dernier peut être réalisé sous forme d'un tunnel de séchage à l'air chaud ou sous forme d'un dispositif de passage à la grande friture, par exemple.

Dans ce dernier cas, on peut prévoir un dispositif d'immersion dans l'eau froide et un dispositif de soufflage d'huile respectivement avant et après le dispositif de passage à la grande friture.

En ce qui concerne les avantages du présent procédé, on a relevé plus haut que, de manière surprenante, il permet effectivement de fabriquer des nouilles présentant des qualités organoleptiques à tout le moins comparables à celles de nouilles, notamment de nouilles orientales, fabriquées par un procédé traditionnel, bien que le présent procédé soit comparativement plus simple.

On peut ajouter à ceci que l'on a également constaté avec surprise que le présent procédé, comprenant de préférence les étapes d'immersion dans l'eau froide et de soufflage de l'huile décrites ci-dessus, peut également permettre de réduire notablement la quantité d'huile absorbée par des nouilles orientales par rapport à la quantité d'huile qu'elles absorbent si elles sont fabriquées par un procédé et avec un appareil traditionnels.

On peut enfin relever le fait que, par rapport à une fabrication de nouilles orientales réalisée à l'aide d'une installation traditionnelle telle que décrite dans l'introduction du présent exposé, le présent procédé permet une fabrication en continu de pâtes orientales qui minimise les fluctuations de la qualité du mélange, notamment de sa teneur en eau et de son élasticité, tout en raccourcissant considérablement la durée de l'étape du mélange.

Un appareil pour la mise en oeuvre du procédé selon la présente invention est décrit plus en détails ci-après en référence au dessin annexé donné à titre d'exemple et dans lequel:
- la Figure 1 est une représentation schématique globale d'une forme de réalisation de l'appareil,
- la Figure 2 est une représentation schématique globale d'une forme de réalisation particulière de l'appareil,
- la Figure 3 est une vue schématique partiellement ouverte du malaxeur et de la filière de la forme de réalisation de l'appareil représentée à la Figure 1,
- la Figure 4 est une vue schématique de dessus d'une vis du malaxeur des formes de réalisation de l'appareil représentées aux Figures 1 à 3,
- la Figure 5 est une vue en coupe transversale des deux vis d'une extrudeuse, pour comparaison, et
- la Figure 6 est une vue en coupe transversale des deux vis du malaxeur des formes de réalisation de l'appareil représentées aux Figures 1 à 3.

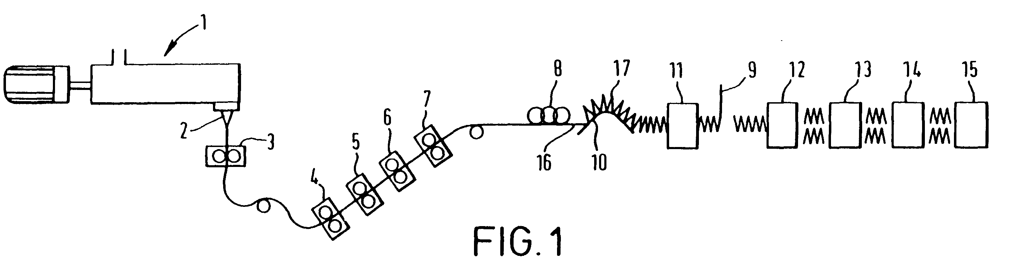

Dans la forme de réalisation représentée à la Figure 1, l'appareil comprend un malaxeur bivis 1, une filière à orifice de sortie rectangulaire 2, un dispositif de laminage 3-7, un dispositif de découpage 8-9, un dispositif de freinage 10, un dispositif de traitement à la vapeur 11, un dispositif de pliage 12, un dispositif d'immersion dans l'eau froide 13, un dispositif de passage à la grande friture 14, et un dispositif de soufflage d'huile 15.

Le dispositif de laminage comprend une succession de cinq paires de rouleaux 3-7 dont l'écartement va décroissant. Une première paire de rouleaux 3 présente un écartement relativement grand, correspondant à la largeur de l'orifice de sortie de la filière, afin de pouvoir bien prendre le contrôle du mouvement d'avance de la bande. Une dernière paire de rouleaux 7 présente un écartement correspondant à l'épaisseur finale désirée des nouilles.

Le dispositif de découpage comprend des moyens de découpage longitudinal, en l'occurrence des disques rotatifs 8 prévus après la dernière paire de rouleaux 7, et des moyens de découpage transversal, en l'occurrence des lames 9 prévues après le dispositif de traitement à la vapeur 11.

Le dispositif de freinage prévu après les moyens de découpage longitudinal 8 comporte une butée 10 contre laquelle les lanières ou nouilles individuelles 16 sont forcées à former des boucles ou ondulations transversales qui forment un flot continu 17 en se serrant l'une derrière l'autre.

Le dispositif de traitement à la vapeur 11 de ces flots de boucles 17 est prévu après le dispositif de freinage 10 et avant les moyens de découpage transversal 9.

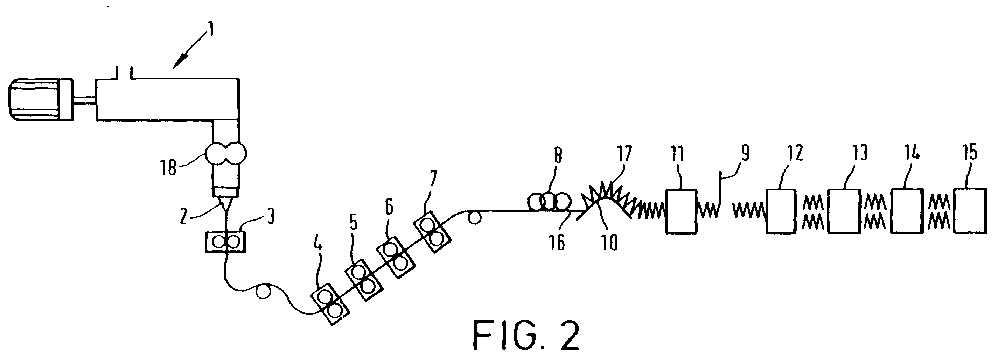

Dans la forme de réalisation particulière représentée à la Figure 2, l'appareil ne diffère de la forme de réalisation représentée à la Figure 1 que par le fait qu'une pompe à engrenage 18 est branchée entre la sortie du malaxeur 1 et la filière 2.

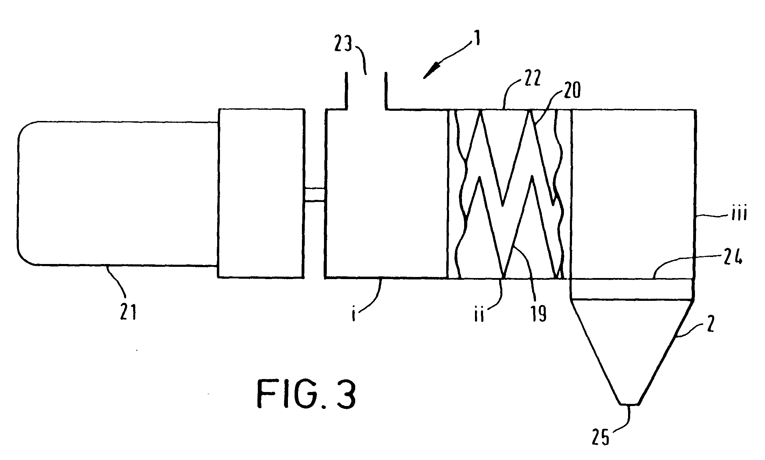

Comme on l'a représenté schématiquement à la Figure 3, le malaxeur 1 de la forme de réalisation de l'appareil représentée à la Figure 1 comprend deux vis 19 et 20 tournant dans le même sens et s'engrenant l'une dans l'autre. Les deux vis sont entraînées par un moteur 21.

Les deux vis 19 et 20 sont renfermées dans un fourreau 22 à double paroi subdivisée en compartiments i-iii dans lesquels on peut faire circuler un fluide de refroidissement ou de réchauffement. Le fourreau 22 présente à une extrémité amont une entrée 23 pour l'alimentation des vis en composants à mélanger et à une extrémité aval une sortie 24 pour le mélange qui débouche directement sur la filière 2.

La filière 2 présente un orifice de sortie 25 rectangulaire prévu dans un plan horizontal, le grand côté du rectangle étant transversal.

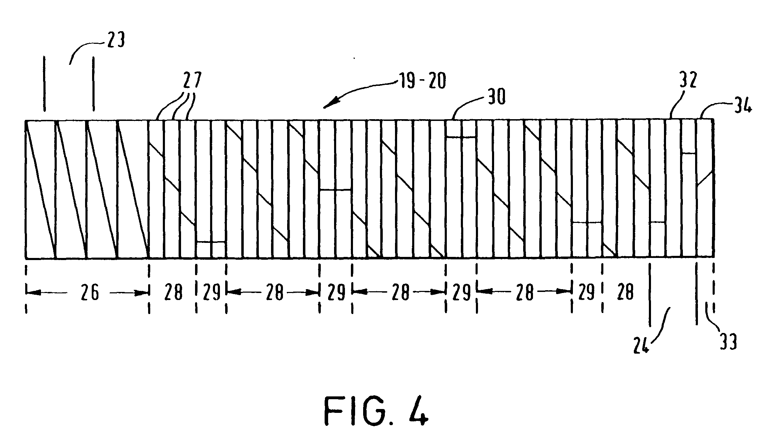

Comme on le voit à la Figure 4, les vis 19 et 20 du malaxeur dont une seule est représentée présentent à leur extrémité amont une zone de mélange 26 formée de quelques bilobes à pas positif. Elles présentent ensuite en alternance cinq zones mixtes de mélange et malaxage 28 formées chacune de quelques bilobes 27 à pas positifs angulairement décalés, et quatre zones de malaxage 29 formées chacune de deux bilobes sans pas 30. Elles présentent à leur extrémité aval une zone de sortie correspondant à la sortie 24 et formée de deux bilobes sans pas séparés par un espace 32. La zone de sortie est suivie en aval par une zone de retenue 33 formée d'un bilobe de retenue 34 à pas négatif.

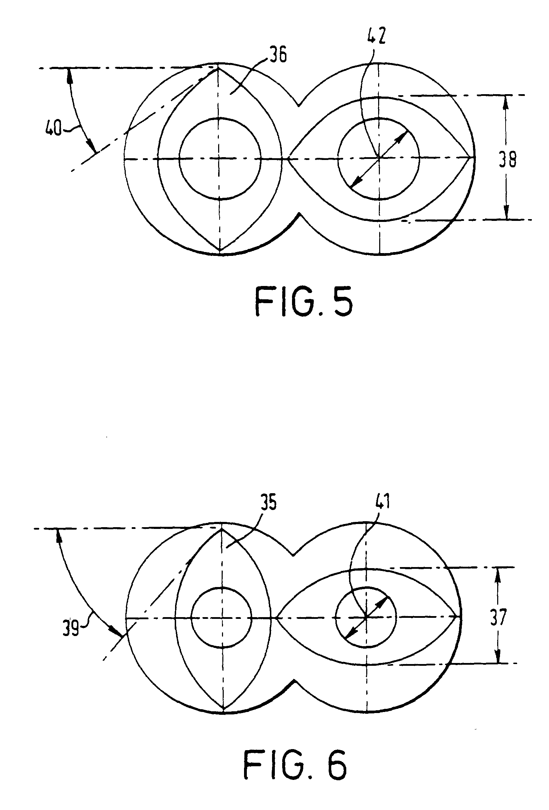

Les Figures 5 et 6 montrent que, vue dans dans le sens de l'axe des vis, la forme des bilobes 35 du malaxeur bivis peut se distinguer de la forme correspondante des bilobes 36 d'une extrudeuse bivis, à titre de comparaison. La largeur 37 des bilobes du malaxeur est inférieure à la largeur 38 des bilobes d'une extrudeuse, ce qui laisse plus d'espace libre à disposition de la matière à traiter.

De même, l'angle d'attaque 39 entre le sommet des bilobes 35 du malaxeur et la paroi intérieure du manteau contre laquelle il tourne est plus ouvert que l'angle d'attaque correspondant 40 des bilobes 36 d'une extrudeuse, ce qui minimise le cisaillement exercé sur la matière traitée.

Le fait que le malaxeur n'exerce que de faibles contraintes de pression et de cisaillement sur la matière à traiter permet également une construction plus légère. C'est ainsi que le diamètre 41 des axes des vis du malaxeur peut être notablement plus petit que le diamètre 42 des axes des vis d'une extrudeuse, ce qui laisse encore plus d'espace libre à disposition de la matière à traiter.

Le procédé selon la présente invention est décrit plus en détails dans les exemples présentés ci-après à titre d'illustration. Les pourcentages y sont donnés en poids.

### Exemple 1

On utilise un appareil correspondant à la forme de réalisation représentée à la Figure 1, dans lequel le malaxeur est un malaxeur TELEDYNE de type READCO comportant deux vis de 125 mm de diamètre s'engrenant l'une dans l'autre et tournant dans le même sens, et présentant une longueur totale de 1100 mm.

La filière présente un orifice de sortie rectangulaire de 10 mm x 100mm.

Le dispositif de laminage comprend une succession de quatre paires de rouleaux dont les écartements sont successivement de 4, 2,5, 1,5 et 0,8 mm.

On alimente le malaxeur avec 730 kg/h de farine de blé tendre présentant une granulométrie de 50-120 um et avec 235 kg/h de kansui présentant la composition suivante:

| | |
|---|---|
| chlorure de sodium | 7,0% |
| CMC | 0,7% |
| K2CO3 | 0,26% |
| Na2CO3 | 0,17% |
| Na polyphosphate | 0,34% |
| beta-carotène | 0,005% |
| eau | différence à 100% |

On ajuste la vitesse de rotation des vis du malaxeur à 80 rpm. Le mélange est ainsi soumis à une pression relative de 600 kPa dans le malaxeur où il séjourne durant environ 45 s.

La bande sortant de la filière présente une épaisseur de 16-18 mm. Elle est abaissée successivement à 5, 3, 2 et 1 mm d'épaisseur après passage dans les paires de rouleaux de laminage.

Elle est découpée ensuite en lanières de 2mm de largeur qui sont transformées en flots continus de boucles transversales en arrivant contre la butée du dispositif de freinage.

Ces flots sont passés à la vapeur à pression atmosphérique à 98°C durant 80 s, puis découpés transversalement en tronçons d'une longueur double de leur largeur qui sont ensuite pliés en deux pour former des pelotes de nouilles carrées.

Les pelotes sont plongées 2 s dans l'eau froide, puis passées à la grande friture, en l'occurrence dans une huile de palme à 135°C durant 70 s.

On refroidit enfin ces pelotes à l'aide d'un souffle d'air froid qui emporte une partie de l'huile restée en surface des nouilles.

On obtient ainsi des nouilles orientales qui présentent des qualités organoleptiques en tous points comparables à celles de nouilles orientales traditionnelles.

Les nouilles orientales ainsi obtenues présentent en outre l'avantage d'avoir absorbé une quantité d'huile réduite d'environ 4-8% en comparaison de la quantité d'huile absorbée par des nouilles orientales telles qu'obtenues par un procédé et à l'aide d'un appareil traditionnels tels que décrits dans l'introduction du présent exposé, par exemple.

### Exemple 2

On procède de la manière décrite à l'exemple 1, à l'exception du fait que le kansui présente la composition suivante:

| | |
|---|---|
| chlorure de sodium | 4,8% |
| CMC | 0,48% |
| K2CO3 | 0,48% |
| Na2CO3 | 0,32% |
| Na polyphosphate | 0,15% |
| beta-carotène | 0,005% |
| eau | différence à 100%, |

le mélange est soumis à une pression relative de 800 kPa dans le malaxeur et les pelotes sont passées à la grande friture durant 80 s.

On obtient ainsi des nouilles orientales qui présentent des qualités organoleptiques en tous points comparables à celles de nouilles orientales traditionnelles.

Les nouilles orientales ainsi obtenues présentent en outre l'avantage d'avoir absorbé une quantité d'huile réduite d'environ 4-8% en comparaison de la quantité d'huile absorbée par des nouilles orientales telles qu'obtenues par un procédé et à l'aide d'un appareil traditionnels tels que décrits dans l'introduction du présent exposé, par exemple.

### Exemple 3

On utilise un appareil correspondant à la forme de réalisation particulière représentée à la Figure 2 jusque et y compris le dispositif de laminage, dans lequel le malaxeur est un malaxeur TELEDYNE de type READCO tel que décrit à l'exemple 1, le fourreau du malaxeur présente une prise d'aspiration par le vide à son extrémité aval juste avant sa sortie, et la pompe à engrenage est une pompe MAAG type VACOREX 90/90.

La filière présente un orifice de sortie rectangulaire de 2 mm x 100 mm.

Le dispositif de laminage comprend une succession de quatre paires de rouleaux dont les écartements sont successivement de 2,0, 1,5, 1,3 et 1mm.

Par circulation d'un fluide de réchauffement, on maintient une température de 48°C dans le fourreau du malaxeur.

On alimente le malaxeur avec 800 kg/h de semoule de blé dur présentant une granulométrie de 250-300 um et avec 200 kg/h d'eau.

On ajuste la vitesse de rotation des vis du malaxeur à 70 rpm. Le mélange est ainsi soumis à une pression relative de 800 kPa dans le malaxeur où il séjourne durant environ 45 s.

On dégaze le mélange par aspiration par un vide égal à une pression absolue de 20 kPa.

On ajuste la vitesse de rotation des rouleaux dentés de la pompe à engrenage à 36 rpm. La pression relative exercée ainsi par la pompe sur le mélange est de 11000 kPa.

La bande sortant de la filière présente une épaisseur de 3-4 mm. Elle est abaissée successivement à 2,5, 1,6, 1,4 et 1,2 mm d'épaisseur après passage dans les paires de rouleaux de laminage.

On découpe la bande laminée dans le sens de la longueur en lanières de 8 mm de largeur que l'on découpe elles-mêmes transversalement en nouilles de quelques dizaines de cm de longueur.

On déshydrate ces nouilles occidentales dans un séchoir à air chaud et à humidité contrôlée traditionnel.

On obtient ainsi des nouilles occidentales ou tagliatelles qui présentent une couleur jaune attrayante sans aucun point blanc et dont les qualités organoleptiques sont comparables, voire supérieures à celles de tagliatelles fabriquées de manière traditionnelle.

## Revendications

1. Procédé de fabrication de nouilles, dans lequel on prépare un mélange de farine ou semoule de céréale et d'eau présentant une teneur en eau de 25-40%, on convertit le mélange en une bande de pâte en le pressant ensuite au travers d'une filière (2) à orifice de sortie oblong; on lamine la bande et on la découpe en nouilles, **caractérisé par le fait que** l'on prépare le mélange dans un malaxeur bivis (1) sous une pression relative de 0-1000 kPa et on le convertit en une bande de pâte en le pressant au travers de la filière (2) sous l'effet de la pression exercée par le malaxeur bivis (1), ou à l'aide d'une pompe à engrenage (18) branchée entre le malaxeur et la filière.

2. Procédé selon la revendication 1, dans lequel, pour fabriquer des nouilles orientales, on prépare un mélange de farine de blé tendre et de kansui, la farine de blé tendre présentant une granulométrie de 50-150 um.

3. Procédé selon la revendication 1, dans lequel, pour fabriquer des nouilles occidentales, on prépare un mélange de semoule de blé dur et d'eau, la semoule de blé dur présentant une granulométrie de 250-350um.

4. Procédé selon la revendication 2, dans lequel le kansui comprend 2-10% de NaCl, 0-1% de CMC, 0,1-1% de K2CO3 et/ou de Na2CO3 et 0-1% de Na polyphosphate.

5. Procédé selon la revendication 1, dans lequel le temps de séjour du mélange dans le malaxeur est 20-60 s.

6. Procédé selon la revendication 1, dans lequel on presse le mélange au travers d'une filière (2) présentant un orifice de sortie rectangulaire de 8-20 mm sur 50-200 mm.

7. Procédé selon la revendication 1, dans lequel on presse le mélange au travers d'une filière (2) présentant un orifice de sortie rectangulaire de 1,5-10 mm sur 50-200 mm.

8. Procédé selon la revendication 1, dans lequel on lamine la bande sortant de la filière en la faisant passer à travers une succession de deux à cinq paires de rouleaux (3-7) dont l'écartement va décroissant, à partir d'un premier écartement de 2-20 mm pour finir avec un dernier écartement de 0,6-1,5 mm.

9. Procédé selon la revendication 2, dans lequel on découpe la bande laminée dans le sens de la longueur en lanières de 1-3 mm de largeur, on met les lanières en forme de pelote, on les traite à la vapeur à pression atmosphérique à 95-100°C durant 1-3 min, on immerse les pelotes dans l'eau froide durant 1-5 s, on les passe à la grande friture à 120-160°C durant 30 s à 2 min et on les refroidit à l'aide d'un souffle d'air froid.

10. Procédé selon la revendication 3, dans lequel on découpe la bande laminée dans le sens de la longueur en lanières de 1-10 mm de largeur.

## Patentansprüche

1. Verfahren zur Herstellung von Nudeln, bei dem man eine Mischung aus Getreidemehl oder -grieß und Wasser mit einem Wassergehalt von 25-40% herstellt, die Mischung in ein Teigband umwandelt, indem man sie durch eine Düse (2) mit einer langgestreckten Austrittsöffnung presst, das Band walzt und zu Nudeln zerschneidet, **dadurch gekennzeichnet, dass** man die Mischung in einer Zweischnecken-Knetvorrichtung (1) unter einem relativen Druck von 0-1000 kPa herstellt und sie in ein Teigband umwandelt, indem man sie unter Einwirkung des von der Zweischnecken-Knetvorrichtung (1) ausgeübten Drucks oder mit Hilfe einer zwischen der Knetvorrichtung und der Düse angeordneten Zahnradpumpe (18) durch die Düse (2) presst.

2. Verfahren nach Anspruch 1, bei dem man zur Herstellung von östlichen Nudeln eine Mischung aus Weichweizenmmehl und Kansui herstellt, wobei das Weichweizenmehl eine Korngröße von 50-150 µm besitzt.

3. Verfahren nach Anspruch 1, bei dem man zur Herstellung von westlichen Nudeln eine Mischung aus Hartweizengrieß und Wasser herstellt, wobei der Hartweizengrieß eine Korngröße von 250-350 µm besitzt.

4. Verfahren nach Anspruch 2, bei dem das Kansui 2-10% NaCl, 0-1% CMC, 0,1-1% K₂CO₃ und/oder Na₂CO₃ und 0-1% Na-Polyphosphat enthält.

5. Verfahren nach Anspruch 1, bei dem die Verweilzeit der Mischung in der Knetvorrichtung 20-60 s beträgt.

6. Verfahren nach Anspruch 1, bei dem man die Mischung durch eine Düse (2) presst, die eine rechteckige Austrittsöffnung von 8-20 mm auf 50-200 mm aufweist.

7. Verfahren nach Anspruch 1, bei dem man die Mischung durch eine Düse (2) presst, die eine rechteckige Austrittsöffnung von 1,5-10 mm auf 50-200 mm aufweist.

8. Verfahren nach Anspruch 1, bei dem man das aus der Düse austretende Band walzt, indem man es durch eine Folge von zwei bis fünf Paaren von Walzen (3-7) hindurchführt, deren Abstand von einem ersten Abstand von 2-20 mm an abnimmt, um mit einem letzten Abstand von 0,6-1,5 mm zu enden.

9. Verfahren nach Anspruch 2, bei dem man das gewalzte Band in Längsrichtung in Streifen mit einer Breite von 1-3 mm schneidet, die Streifen in Knäuelform bringt, sie 1-3 min mit Dampf mit atmosphärischem Druck und 95-100°C behandelt, die Knäuel während 1-5 s in kaltes Wasser taucht, sie 30 s bis 2 min bei 120-160°C frittiert und sie mit Hilfe von Kaltluft kühlt.

10. Verfahren nach Anspruch 3, bei dem man das gewalzte Band in Längsrichtung in Streifen mit einer Breite von 1-10 mm schneidet.

## Claims

1. Process for the manufacture of noodles, wherein a mixture of cereal flour or semolina and water is prepared having a water content of 25-40 %, the mixture is processed into a strip of dough by then pressing it through a die (2) having an oblong outlet orifice, and the strip is calendered and cut up into noodles, **characterized in that** the mixture is prepared in a twin screw mixer (1) under a relative pressure of 0-1000 kPa and is processed into a strip of dough by pressing it through the die (2) under the effect of the pressure exerted by the twin screw mixer (1), or with the aid of a gear pump (18) connected between the mixer and the die.

2. Process according to claim 1 wherein, in order to manufacture oriental noodles, a mixture is prepared of soft wheat flour and kansui, the soft wheat flour having a particle size of 50-150 µm.

3. Process according to claim 1 wherein, in order to manufacture occidental noodles, a mixture is prepared of durum wheat semolina and water, the durum wheat semolina having a particle size of 250-350 µm.

4. Process according to claim 2, wherein the kansui comprises 2-10 % NaCl, 0-1 % CMC, 0.1-1 % K₂CO₃ and/or Na₂CO₃ and 0-1 % Na polyphosphate.

5. Process according to claim 1, wherein the dwell time of the mixture in the mixer is 20-60 s.

6. Process according to claim 1, wherein the mixture is pressed through a die (2) having a rectangular outlet orifice of 8-20 mm by 50-200 mm.

7. Process according to claim 1, wherein the mixture is pressed through a die (2) having a rectangular outlet orifice of 1.5-10 mm by 50-200 mm.

8. Process according to claim 1, wherein the strip leaving the die is calendered by passing it through a succession of two to five pairs of rollers (3-7), the gap between which decreases, from a first gap of 2-20 mm to finish with a final gap of 0.6-1.5 mm.

9. Process according to claim 2, wherein the calendered strip is cut up in the direction of the length into laces 1-3 mm wide, the laces are formed into skeins, they are treated with steam at atmospheric pressure at 95°C-100°C for 1-3 min, the skeins are immersed in cold water for 1-5 s, they are deep-fried at 120-160°C for 30 s to 2 min and cooled with the aid of a cold air blast.

10. Process according to claim 3, wherein the calendered strip is cut up in the direction of the length into laces 1-10 mm wide.
